# EUROPÄISCHE PATENTSCHRIFT

(11) **EP 2 158 648 B1**
(45) Veröffentlichungstag und Bekanntmachung des Hinweises auf die Patenterteilung: **25.02.2015**
(21) Anmeldenummer: 08760781.8
(22) Anmeldetag: 10.06.2008
(51) Int. Cl.: H01R 25/14, H01R 13/506, B60M 1/34

(54) **MEHRPOLIGE SCHLEIFLEITUNG**
MULTI-POLE CONDUCTOR LINE
RAIL CONDUCTEUR MULTIPOLAIRE

(30) Priorität: 11.06.2007 DE 102007026907
(43) Veröffentlichungstag der Anmeldung: 03.03.2010
(73) Patentinhaber: Conductix-Wampfler GmbH, 79576 Weil am Rhein-Märkt (DE)
(72) Erfinder: SCHMIEDLE, Andreas, 79541 Lörrach (DE); MUTZ, Jörg, 79427 Eschbach (DE)
(74) Vertreter: Charrier, Rapp & Liebau
(86) Internationale Anmeldenummer: PCT/EP2008/057221
(87) Internationale Veröffentlichungsnummer: WO 2008/152033

(56) Entgegenhaltungen:
- EP-A- 0 871 263
- EP-A- 1 750 342
- DE-A1- 10 359 541
- DE-A1- 19 755 513
- GB-A- 2 137 439

## Beschreibung

Die Erfindung betrifft eine mehrpolige Schleifleitung nach dem Oberbegriff des Anspruchs 1. Solche Schleifleitungen sind beispielsweise aus der DE 103 59 541 A1 und aus der DE 199 17 309 A1 bekannt. Es handelt sich dabei jeweils um ein Kunststoff-Extrusionsprofil, in dem die Stromschienen der Schleifleitung voneinander isoliert angeordnet sind. Das Profil besteht aus einer Vielzahl von Kammern, von denen eine Gruppe zur Vorderseite des Profils hin offen ist. In den Kammern dieser Gruppe sind die Stromschienen angeordnet und von der offenen Vorderseite her für die Stromabnehmer eines entlang der Schleifleitung fahrenden Fahrzeugs zugänglich. Zwei andere Gruppen von Kammern, die im Querschnitt geschlossen sind, bilden die rückseitige Basis des Profils bzw. die Isolation zwischen den Stromschienen.

Schleifleitungen dieser Art haben im allgemeinen eine Gesamtlänge, die es erfordert, mehrere Isolierprofile stirnseitig aufeinanderfolgend anzuordnen. Dabei muß eine mechanisch stabile Verbindung zwischen den einzelnen Isolierprofilen einer Schleifleitung geschaffen werden, wozu geeignete Verbindungsglieder eingesetzt werden. Zum Eingriff mit solchen Verbindungsgliedern ist eine entsprechende Formgebung der Endbereiche der Isolierprofile notwendig, die nicht im Rahmen der Extrusion erfolgen kann, sondern eine nachträgliche Bearbeitung erfordert, wodurch sich der Herstellungsaufwand erhöht.

Darüber hinaus besteht das Problem, dass an den Verbindungsstellen zwischen den einzelnen Isolierprofilen einer Schleifleitung die isolierende Wirkung unterbrochen ist. Dort treffen die Längen der Luft- und Kriechstrecken zwischen den einzelnen Stromschienen, d.h. der kürzesten Wege zwischen den Oberflächen zweier benachbarter Stromschienen durch den freien Raum bzw. entlang der Oberfläche des Isolierprofils, die entlang eines Isolierprofils durch dessen Querschnittsform vorgegeben sind, nicht mehr zu. Vielmehr sind an einer solchen Verbindungsstelle, wenn nicht zusätzliche Maßnahmen getroffen werden, die Länge der Luftstrecke durch den direkten Abstand zweier benachbarter Stromschienen und die Länge der Kriechstrecke durch den kürzesten Weg zwischen zwei benachbarten Stromschienen auf der Stirnseite des Isolierprofils gegeben. Diese an einer Verbindungsstelle wirksamen Längen sind im allgemeinen deutlich kürzer als die entsprechenden Längen entlang des Isolierprofils.

Die Längen der Luft- und Kriechstrecken unterliegen einschlägigen Sicherheitsvorschriften, die unter dem Gesichtspunkt der Produkthaftung eingehalten werden müssen, und zwar entlang einer gesamten Schleifleitung, d.h. auch an besagten Verbindungsstellen. Dies ist natürlich um so schwieriger zu erreichen, je kompakter die Gesamtabmessungen einer Schleifleitung sein sollen.

Eine Möglichkeit zur Verlängerung der Luft- und Kriechstrecken an den Verbindungsstellen zwischen den einzelnen Isolierprofilen auf sicherheitstechnisch vorschriftsmäßige Werte besteht in der Einfügung zusätzlicher Isolationselemente in diesem Bereich im Zuge des Zusammenbaus der einzelnen Isolierprofile. Hierzu müssen die Endbereiche der Isolierprofile zur Aufnahme besagter Isolationselemente vorbereitet werden, wodurch weiterer Aufwand bei der Herstellung der Isolierprofile verursacht wird. Dies gilt insbesondere dann, wenn dabei eine nachträgliche Bearbeitung der Isolierprofile von den Stirnseiten her vorgenommen werden muss.

Ein zusätzliches Problem stellt im vorliegenden Zusammenhang der große Unterschied zwischen den thermischen Ausdehnungskoeffizienten der metallischen, üblicherweise aus Kupfer bestehenden Stromschienen und der aus Kunststoff bestehenden Isolierprofile dar. Dieser würde wegen der mitunter erheblichen Länge einer Schleifleitung zu thermisch induzierten Längsspannungen von enormer Größe führen, wenn nicht Gegenmaßnahmen in Form der Bereitstellung von Dehnfugen getroffen würden. An solchen Dehnfugen stellt sich das Problem einer Unterbrechung der Isolationswirkung der Isolierprofile in verschärfter Form, da hier sogar eine Lücke von erheblichem und zudem variablem Ausmaß zwischen zwei aufeinanderfolgenden Isolierprofilen in Kauf genommen und isolationstechnisch behoben werden muss.

Aus der GB 2 137 439 A ist eine Verbindung für aneinander anschließende Abschnitte einer einpoligen Schleifleitung bekannt, bei der von den Stirnenden her leitende Stecker in die Stromschienen eingeschoben sind. Die Verbindung kann je nach Bedarf leitend oder isolierend sein. Bei der isolierenden Variante ist der aus der Stromschiene herausragende Abschnitt eines leitenden Steckers in einen aus isolierendem Kunststoff bestehenden Isolierverbinder eingesteckt. Der Isolierverbinder hat einen gewellten Isoliersteg, der von einer Stegstütze in der gewünschten Lage gehalten wird. Die gesamte Verbindungsstelle ist von einem Stoßverbinder umgeben.

Die DE 197 55 513 A1 zeigt einen Dehnverbinder für aufeinanderfolgende Abschnitte einer einpoligen Schleifleitung. Dieser Dehnverbinder besteht aus einer die zugeordneten Enden der Stromschienen aufnehmenden, deren Schleifflächen freilassenden Kunststoffaufnahme, in der die beiden Enden der Stromschienen jeweils zwischen zwei Anschlägen relativ zueinander längsverschiebbar sind. Die Metallprofile der beiden Stromschienen sind durch Metallstege elektrisch leitend miteinander verbunden.

Die EP 1 750 342 A1 zeigt ein Isolierprofil, in dem mehrere Stromschienen angeordnet und dabei hermetisch gegen die Umgebung abgedichtet sind. Dieses Isolierprofil ist zum Einsatz in der elektrischen Ausrüstung von Gebäuden bestimmt und soll durch seine Abdichtung unempfindlich gegen Feuchtigkeit, insbesondere in Form von Tropf- und Sickerwasser sein. Eine stirnseitige Verbindung zweier solcher Profile ist in dem Dokument nicht vorgesehen.

In Anbetracht des Standes der Technik besteht die Aufgabe der Erfindung darin, eine neue und zweckmäßige Lösung für die Verbindung aufeinanderfolgender Isolierprofile einer mehrpoligen Schleifleitung anzugeben, die eine ausreichende Länge der Luft- und Kriechstrecken zwischen den Stromschienen der Schleifleitung gewährleistet und sich durch einen möglichst geringen Arbeitsaufwand bei der Montage auszeichnet.

Diese Aufgabe wird erfindungsgemäß durch eine Schleifleitung mit den Merkmalen des Anspruchs 1 gelöst. Vorteilhafte Ausgestaltungen der Erfindung sind in den Unteransprüchen angegeben.

Die Erfindung geht von einer mehrpoligen Schleifleitung mit einem Isolierprofils bekannter Art aus und sieht zur stirnseitigen Verbindung der Isolierprofile Verbindungsglieder aus isolierendem Material vor, die als Bestandteile jeweils mindestens ein Steckelement, welches an der Stirnseite eines Isolierprofils in eine geschlossene Kammer des Isolierprofils einsteckbar ist, und mindestens ein Anschlagelement, welches die Einstecktiefe eines Steckelements in einem Isolierprofil begrenzt, aufweisen.

Damit kann auf einfache Weise mit nur wenigen Komponenten und Arbeitsschritten von den Stirnseiten her eine mechanisch stabile und elektrisch isolierende Verbindung zwischen aufeinanderfolgenden Isolierprofilen einer Schleifleitung geschaffen werden. Die Isolierprofile werden durch die Verbindungsglieder miteinander fluchtend ausgerichtet, wobei der Querschnitt der zur Vorderseite hin offenen Kammern nicht verengt wird, so dass die dort laufenden Stromabnehmer an den Verbindungsstellen nicht behindert werden. Die Steckelemente ragen in diejenigen geschlossenen Kammern hinein, welche sich unmittelbar zwischen den Stromschienen befinden. Hierdurch werden die ansonsten hier an den Verbindungsstellen vorhandenen kurzen Luftstrecken zwischen den Stromabnehmern unterbrochen und auf eine Länge verlängert, die durch die Geometrie der Steckelemente bestimmt wird. Im Hinblick auf diese Funktion bestehen. die Verbindungsglieder ausschließlich aus isolierendem Material. Die Verbindungsglieder erfüllen also eine Doppelfunktion, nämlich sowohl diejenige der mechanischen Verbindung der Isolierprofile in fluchtender Ausrichtung zueinander, als auch diejenige einer zusätzlichen Isolation zwischen den Stromschienen an den Verbindungsstellen zweier Isolierprofile.

Zweckmäßigerweise ist ein erfindungsgemäßes Verbindungsglied so geformt und in seinen Abmessungen so dimensioniert, dass die minimale Länge eines auf der Oberfläche eines Verbindungsgliedes verlaufenden Pfades, der von einem ersten Punkt auf der Oberfläche des Verbindungsgliedes, welcher im vorgesehenen Einbauzustand des Verbindungsgliedes in einem Isolierprofil einer ersten Stromschiene am nächsten liegt, zu einem zweiten Punkt auf der Oberfläche des Verbindungsgliedes führt, welcher einer anderen Stromschiene am nächsten liegt, eine vorbestimmte Mindestlänge hat. Hierdurch ist nämlich gewährleistet, dass die Länge der insgesamt wirksamen Kriechstrecke zwischen zwei Stromschienen an der Stirnseite eines Isolierprofils durch das Einfügen eines Verbindungsgliedes zumindest nicht signifikant verkürzt wird.

Besonders vorteilhaft ist es, wenn das Verbindungsglied auch mindestens ein Rastelement, durch welches ein formschlüssiger Eingriff zwischen dem Verbindungsglied und einem Isolierprofil herstellbar ist, aufweist. In diesem Fall erfüllen die Verbindungsglieder zusätzlich auch die Funktion der mechanischen Befestigung der Isolierprofile aneinander in Bezug auf die Längsrichtung der Schleifleitung. Hierbei sorgt eine Ausführungsform der Erfindung für eine feste, d.h. unbewegliche Verbindung, während eine andere Ausführungsform eine Verbindung mit einem vorbestimmten Spielraum für thermisch bedingte Dehnungs- und Kontraktionsbewegungen in Längsrichtung bereitstellt.

Weitere Einzelheiten und Vorteile der Erfindung gehen aus den Unteransprüchen und aus der nachfolgenden Beschreibung eines Ausführungsbeispiels anhand der Zeichnungen hervor. In den Zeichnungen zeigt
- Fig. 1: eine Querschnittsansicht eines erfindungsgemäßen Isolierprofils,
- Fig. 2: eine Querschnittsansicht des Isolierprofils von Fig. 1 in Verbindung mit einem Trägerprofil,
- Fig. 3: eine perspektivische Ansicht des Isolierprofils von Fig. 1,
- Fig. 4: eine perspektivische Ansicht eines Ausschnitts des Isolierprofils von Fig. 1 mit erfindungsgemäßen Verbindungsgliedern einer ersten Art in zwei verschiedenen Positionen,
- Fig. 5: ein erfindungsgemäßes Verbindungsglied einer ersten Art in vier verschiedenen Ansichten,
- Fig. 6: eine Querschnittsansicht eines vergrößerten Ausschnitts des Isolierprofils von Fig. 1 mit einem darin befindlichen Stecker eines Verbindungsgliedes einer ersten Art,
- Fig. 7: eine perspektivische Ansicht sowie eine Seitenansicht einer Abwandlung des Isolierprofils von Fig. 1, mit einem modifizierten Endbereich und einem darin eingesteckten Verbindungsglied einer zweiten, mehrteiligen Art, und
- Fig. 8: drei perspektivische Ansichten von Bestandteilen eines Verbindungsgliedes einer zweiten, mehrteiligen Art.

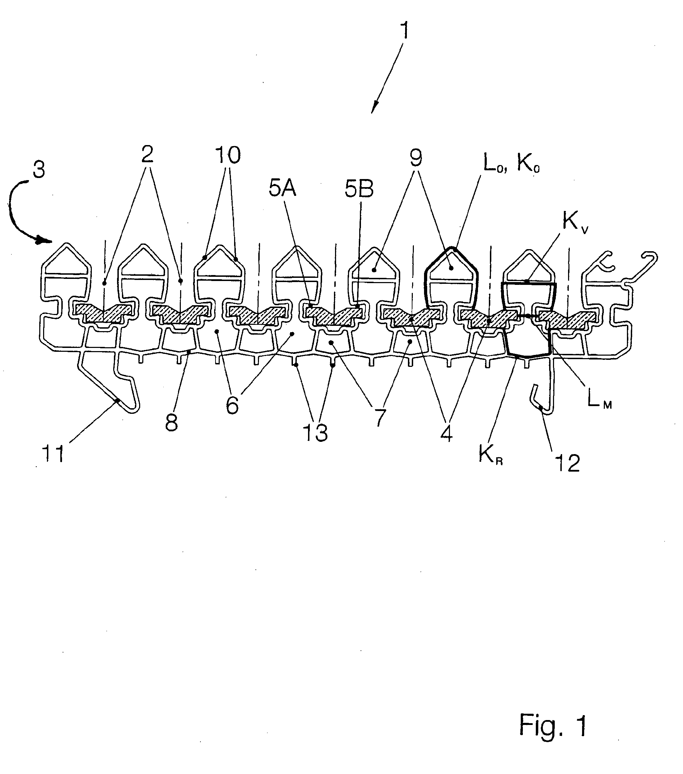

Wie aus Fig. 1 zu ersehen ist, weist ein erfindungsgemäßes Isolierprofil 1 im Querschnitt eine regelmäßige Anordnung von mehreren Kammern auf, die sich in Längsrichtung des Profils, d.h. senkrecht zur Zeichenebene von Fig. 1 erstrecken. Eine Gruppe von Kammern 2 ist im Querschnitt nach einer Seite hin offen und definiert dadurch eine offene, in Fig. 1 oben befindliche Vorderseite 3 des Isolierprofils 1. Die Kammern 2 der offenen Gruppe weisen jeweils zwei zur formschlüssigen Halterung einer Stromschiene 4 geeignete Hinterschneidungen 5A und 5B auf. Wandabschnitte mehrerer nebeneinander liegender geschlossener Kammern 6 und 7 bilden zusammen eine der offenen Vorderseite 3 des Isolierprofils gegenüberliegende, in Fig. 1 unten befindliche Rückwand 8 des Isolierprofils 1.

Mit den hier im Zusammenhang mit einer Gruppe von Kammern verwendeten Begriffen "offen" und "geschlossen" ist nicht eine Eigenschaft der Gruppierung, sondern eine Eigenschaft jeder einzelnen der zu der Gruppe gehörenden Kammern gemeint. Der Begriff "Gruppe" soll hierbei zum Ausdruck bringen, dass alle zu einer Gruppe gehörigen Kammern die gleiche Querschnittsform haben. Die in Fig. 1 gezeigte Lage des Isolierprofils 1 ist nicht notwendigerweise seine Einbaulage an einem Einsatzort, denn diese ist typischerweise hochkant, also gegenüber der Darstellung von Fig. 1 um ±90° gedreht. Sie könnte aber auch um 180° gedreht sein. Soweit hier Begriffe wie "oben" und "unten" verwendet werden, die vertikale Anordnungen kennzeichnen, beziehen sich diese lediglich auf die Lage des Isolierprofils 1 in Fig. 1.

Die Kammern 6 einer ersten geschlossenen Gruppe erstrecken sich von der Rückwand 8 des Profils 1 aus in Richtung der offenen Vorderseite 3 des Profils 1 bis über die Hinterschneidungen 5A, 5B der Kammern 2 der offenen Gruppe hinaus. Jeweils eine Kammer 6 dieser ersten geschlossenen Gruppe ist zwischen zwei benachbarten Kammern 2 der offenen Gruppe angeordnet. Durch die Hinderschneidungen 5A, 5B ergibt sich für die Kammern 6 der ersten geschlossenen Gruppe jeweils eine Einengung ihrer Breite im mittleren Bereich. Zwischen zwei benachbarten Kammern 6 der ersten geschlossenen Gruppe ist unterhalb der dazwischen liegenden Kammer 2 der offenen Gruppe jeweils eine Kammer 7 einer anderen geschlossenen Gruppe angeordnet. An der offenen Vorderseite 3 des Isolierprofils 1 ist zwischen zwei benachbarten Kammern 2 der offenen Gruppe jeweils eine Kammer 9 einer weiteren geschlossenen Gruppe angeordnet, die jeweils an eine Kammer 6 der ersten geschlossenen Gruppe angrenzt, und zwar an deren oberem, d.h. vorderem Ende. Die der Vorderseite 3 des Profils 1 zugewandte Außenwand 10 einer Kammer 9 hat im Querschnitt eine nach vorne vorspringende Form, bei dem in Fig. 1 gezeigten Beispiel im wesentlichen die eines Satteldachs.

Wie aus der Querschnittsansicht von Fig. 1 unmittelbar ersichtlich ist, verläuft entlang eines Isolierprofils 1 die kürzeste Verbindung zwischen zwei benachbarten Stromschienen 4 sowohl im freien Raum, als auch auf der Oberfläche eines Isolators jeweils auf der vorderseitigen Oberfläche des Isolierprofils 1, d.h. die Längen L₀ und K₀ der sogenannten Luft- und Kriechstrecken sind gleich lang und durch die Querschnittsform der den offenen Kammern 2 zugewandten Wandabschnitte der geschlossenen Kammern 6 sowie der Außenwände 10 der geschlossenen Kammern 9 vorgegeben. In Fig. 1 sind die in diesem Fall zusammenfallenden Luft- und Kriechstrecken L₀ und K₀ an einer Kammer 6 und der zugehörigen Kammer 9 durch eine dicke Linie entlang besagter Wandabschnitte bzw. Außenwände gekennzeichnet.

An einem stirnseitigen Ende eines Isolierprofils 1 ist dessen Isolationswirkung jedoch unterbrochen, so dass dort, wenn nicht zusätzlichen Maßnahmen getroffen würden, die Luftstrecke L_{M} einfach durch den kürzesten Abstand zwischen zwei benachbarten Stromschienen 4 gegeben wäre. Diese Luftstrecke L_{M}, die wesentlich kürzer ist als die entlang des Profils 1 wirksame Luftstrecke L₀, ist in Fig. 1 an einer Stelle durch eine kurze dicke Linie gekennzeichnet.

Für die Kriechstrecke ist hier die Querschnittform der zwischen den Stromschienen 4 liegenden Klammern 6 maßgeblich, da nun ein Kriechstrom auf der Stirnfläche des Profils 1 entlang der stirnseitigen Endflächen der Wände der Kammern 6 fließen kann. Für einen solchen Kriechstrom bieten die Wände der Kammern 6 zwei Pfade, nämlich einen über die Vorderseite des Profils 1 und einen über die Rückseite des Profils 1. Die jeweiligen Kriechstrecken K_{V} und K_{R} sind in Fig. 1 ebenfalls als dicke Linien eingetragen. Während die Kriechstrecke K_{R} über die Rückwand 8 des Profils 1 verläuft, ist für die Kriechstrecke K_{V} jeweils die Trennwand zwischen einer Kammer 6 und angrenzenden Kammer 9 maßgeblich. Diese Trennwand trägt zur mechanischen Stabilität bei und ist hinsichtlich der Länge der wirksamen Kriechstrecke unschädlich, da die Längen der beiden Kriechstrecken Kv und K_{R} bei dem in Fig. 1 gezeigten Ausführungsbeispiel etwa gleich sind. Ein Weglassen besagter Trennwand würde zwar die Kriechstrecke Kv, nicht jedoch die insgesamt wirksame Kriechstrecke verlängern, da letztere durch die kürzere der beiden Kriechstrecken Kv und K_{R} bestimmt wird.

Wie Fig. 1 erkennen läßt, sorgt die Erstreckung der Kammern 6 über einen großen Teil der Höhe des Profils 1, d.h. von der Rückwand 8 bis deutlich über die Hinterschneidungen 5A, 5B hinaus für einen relativ großen Wert der Längen der Kriechstrecken Kv und K_{R}. Um bei einer geringeren Erstreckung der Kammern 6 in der Höhe die gleiche Kriechstreckenlänge zu erzielen, müßte die seitliche Ausdehnung der Kammern 6 größer sein, was insgesamt zu einer Verbreiterung des Profils 1 führen würde. Dies würde dem Ziel einer möglichst kompakten Bauweise, wie es bei modernen Schleifleitungen verfolgt wird, zuwiderlaufen. Die erfindungsgemäße Gestaltung der Kammern 6 erlaubt es also, eine kompakte Bauweise einer Schleifleitung mit der Einhaltung vorschriftsmäßiger Mindestlängen der Kriechstrecken an den stirnseitigen Verbindungsstellen der einzelnen Isolierprofile 1, die unvermeidbar zum Aufbau einer Schleifleitung üblicher Länge gehören, in Einklang zu bringen.

Die rückseitige Kriechstrecke K_{R} ließe sich zwar durch den Verzicht auf die Ausbildung der hinter den Stromschienen 4 liegenden Kammern 7, d.h. durch ein direktes Angrenzen benachbarter Kammern 6 aneinander hinter einer Stromschiene noch verlängern, doch würde dies die Stabilität des Profils 1 beeinträchtigen, da jede Stromschiene 4 in diesem Fall nur noch durch eine einzige Kammertrennwand abgestützt würde. Außerdem würde die insgesamt wirksame Kriechstreckenlänge dadurch nicht verlängert werden, denn diese würde dann durch die vorderseitige Kriechstrecke K_{V} bestimmt.

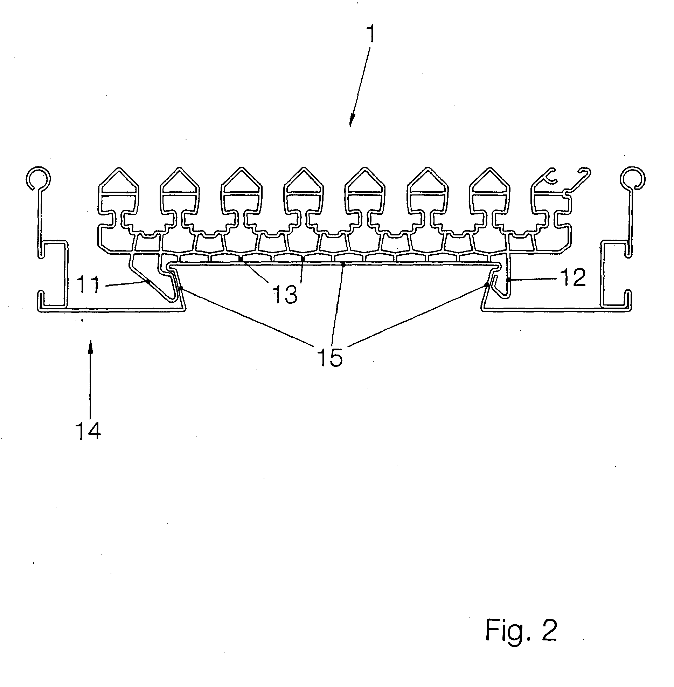

In Fig. 1 sind noch zwei einstückig an die Rückwand 8 angeformte, im wesentlichen hakenförmige Befestigungselemente 11 und 12, sowie von der Rückwand 8 senkrecht abstehende Rippen 13 erkennbar. Diese Elemente dienen der Befestigung des Isolierprofils 1 an einem Trägerprofil 14, welche in Fig. 2 dargestellt ist. Wie Fig. 2 zeigt, hat das Trägerprofil 14 in seinem mittleren Abschnitt 15 eine zu der Rückseite des Isolierprofils 1 komplementäre Form, so dass das Isolierprofil 1 mit Hilfe der Befestigungselemente 11 und 12 auf den mittleren Abschnitt 15 des Trägerprofils 14 aufgeschnappt werden kann und dann formschlüssig mit diesem verbunden ist. Dabei stützen die Rippen 13 die Rückwand 8 des Isolierprofils 1 auf dem Trägerprofil 14 ab.

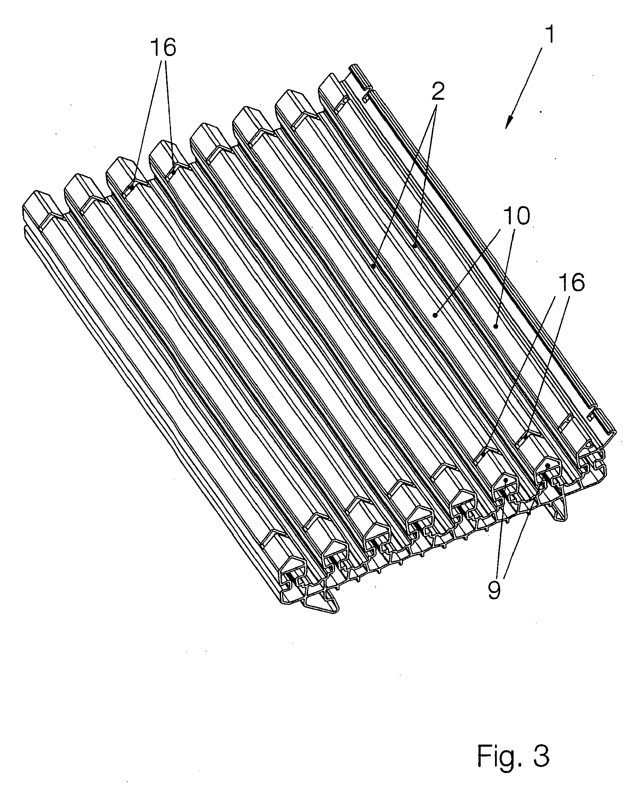

Eine perspektivische Ansicht eines erfindungsgemäßen Isolierprofils 1 zeigt Fig. 3. Dabei ist die Länge im Verhältnis zur Breite nicht maßstäblich, sondern stark verkürzt dargestellt. Erkennbar sind in der Ansicht von Fig. 3 insbesondere Öffnungen 16 in den vorspringenden Außenwänden 10 der Kammern 9 nahe den beiden Enden des Isolierprofils 1, d.h. in einem vorbestimmten Abstand von dessen Stirnseiten. Diese Öffnungen 16 haben alle dieselbe Form, d.h. eine überall gleiche Länge in Längsrichtung des Profils 1 sowie eine überall gleiche Weite quer zur Länge. Bei dem gezeigten Ausführungsbeispiel, bei dem die Außenwände 10 jeweils im wesentlichen die Form eines Satteldachs haben, erstreckt sich die Weite einer Öffnung 16 jeweils nahezu über die gesamte Breite einer Kammer 9.

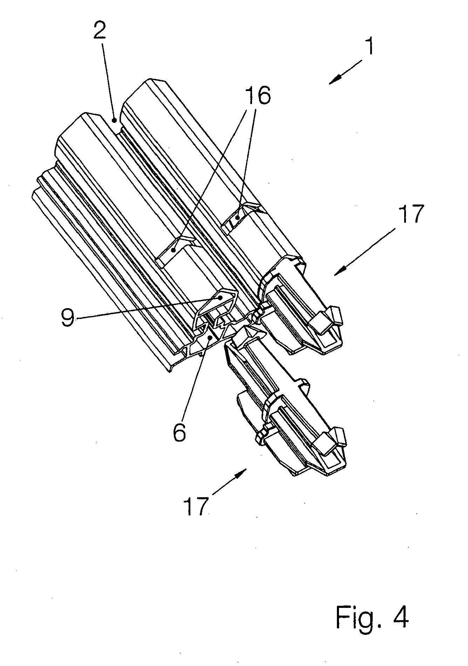

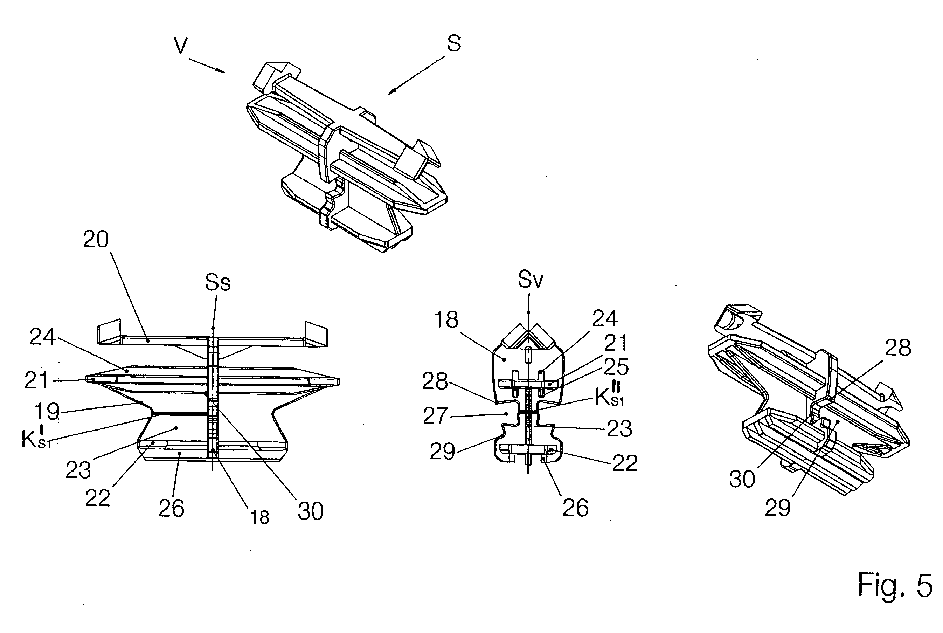

Die Öffnungen 16 dienen zur formschlüssigen stirnseitigen Verbindung mehrerer Isolierprofile 1 miteinander unter Verwendung geeigneter Verbindungsglieder, die im weiteren anhand der Figuren 4 und 5 erläutert werden wird. Der Vorteil dieser Form der Öffnungen 16 besteht darin, dass alle Öffnungen 16 nahe jeweils einem der beiden Enden des Profils 1 äußerst rationell durch einen einzigen Sägeschnitt in Querrichtung hergestellt werden können, wobei sich die Länge der Öffnungen 16 in Längsrichtung des Profils 1 aus der Breite des Sägeblattes und die Weite in Querrichtung bei einer gegebenen konvexen Form der Außenwand 10 einer Kammer 9 aus der Tiefe des Sägeschnittes ergibt. Eine serielle Bearbeitung zur Herstellung jeder einzelnen Öffnung 16 ist somit nicht erforderlich. Es versteht sich, dass eine vorspringende Formgebung der zwischen den offenen Kammern 2 liegenden vorderseitigen Wandabschnitte 10 des Profils 1, die durch die Außenwände 10 der Kammern 9 gebildet werden, die Voraussetzung für die Möglichkeit darstellt, die Öffnungen 16 auf eine solche Weise herzustellen.

Wie zuvor erläutert, sorgt die erfindungsgemäße Formgebung der Kammern 6 bereits allein für eine ausreichende Kriechstreckenlänge an einer Verbindungsstelle zweier Isolierprofile 1. Die Schaffung einer Luftstrecke vorschriftsmäßiger Länge erfordert noch die Einfügung eines isolierenden Elements in die Kammern 6 an den Verbindungsstellen, um die dort zunächst viel zu kurze Luftstrecke L_{M}, wie sie in Fig. 1 markiert ist, zu unterbrechen. Diese Maßnahme ist in Fig. 4 anhand eines Ausschnitts des erfindungsgemäßen Isolierprofils 1 dargestellt. Der Ausschnitt zeigt links unten ein Verbindungsglied 17, welches vollständig aus einem isolierenden Werkstoff besteht, vor einer geschlossenen Kammer 6 in einer Ausrichtung, in der es durch eine lineare Verschiebung in die Kammer 6 eingesteckt werden kann, wobei gleichzeitig auch ein Teil des Verbindungsglieds 17 in die darüber liegende Kammer 9 gelangt. Darüber ist ein weiteres, identisches Verbindungsglied 17 zu sehen, das bereits vollständig, d.h. so weit wie möglich, in die Kammer 6 eingesteckt ist.

Das Verbindungsglied 17 ist in Fig. 5 in vier Ansichten, nämlich oben links in einer perspektivischen Ansicht von oben, in der Mitte links in einer Seitenansicht, in der Mitte recht in einer Vorderansicht, und unten rechts in einer perspektivischen Ansicht von unten dargestellt. In der perspektivischen Ansicht links oben sind die Richtungen der Seitenansicht und der Vorderansicht jeweils durch mit S bzw. mit V gekennzeichnete Pfeile angedeutet. In der Seiten- und Vorderansicht ist jeweils eine Symmetrielinie S_{S} bzw. S_{V}, die eine senkrecht zur Zeichenebene verlaufende Symmetrieebene markiert, gestrichelt eingezeichnet.

Das Verbindungsglied 17 ist ein einstückiges Bauteil. Es besteht aus einer Grundplatte 18, zwei von der Grundplatte 18 symmetrisch zu deren Mittelebene senkrecht abragenden Steckern 19, sowie zwei von der Grundplatte ebenfalls symmetrisch zu deren Mittelebene senkrecht abragenden Schnapphaken 20. Der Übersichtlichkeit halber ist in der Seitenansicht nur eine der beiden symmetrischen Hälften mit Bezugszahlen versehen. Die Außenkontur des Steckers 19 ist an die Innenkontur der Kammer 6 so angepaßt, dass der Stecker 19 an einem stirnseitigen Ende des Isolierprofils 1 in die Kammer 6 einsteckbar ist. Wie insbesondere an den perspektivischen Darstellungen und an der Vorderansicht zu erkennen ist, hat der Stecker 19 von vorne gesehen einen oberen und einen unteren Quersteg 21 bzw. 22 und zwischen diesen beiden einen Hauptsteg 23, so dass er in der Vorderansicht etwa die Grundform des Großbuchstabens I aufweist. Diese Form korrespondiert mit der Querschnittsform der Kammer 6, wobei der Hauptsteg 23 der mittigen Einengung der Kammer 6 durch die Hinterschneidungen 5A, 5B der benachbarten offenen Kammern 2 zugeordnet ist, während die beiden Querstege 21 und 22 den beiden breiteren Bereichen der Kammer 6 über bzw. unter besagter mittiger Einengung zugeordnet sind.

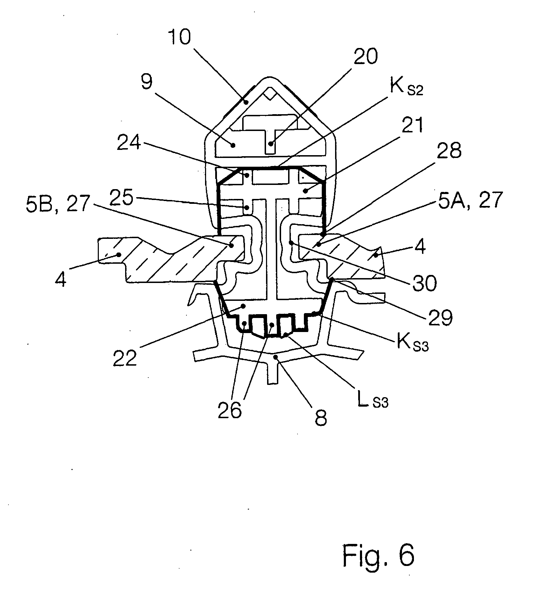

Die Außenkontur des Querschnitts des Steckers 19 muß nicht exakt der Innenkontur einer Kammer 6 entsprechen, sondern es kommt nur darauf an, dass nach dem Einstecken des Steckers 19 in eine Kammer 6 allenfalls noch ein geringes Spiel zwischen dem Stecker 19 und der Wand der Kammer 6 besteht. In dem gezeigten Ausführungsbeispiel ist die Breite der Querstege 21 und 22 so bemessen, dass diese nach dem Einstecken des Steckers 19 in eine Kammer 6 seitlich an der Wand der Kammer 6 zumindest annähernd anliegen und so für eine Fixierung des Steckers 19 in seitlicher Richtung sorgen. Dies ist in Fig. 6 deutlich erkennbar, die eine Querschnittsansicht eines vergrößerten Ausschnitts des Isolierprofils von Fig. 1, nämlich jeweils eine Kammer 6 und eine Kammer 9 mit einem in der Kammer 6 befindlichen Stecker 19 eines Verbindungsglieds 17 zeigt.

Außerdem ragen von dem oberen Quersteg 21 jeweils zwei obere und untere Rippen 24 bzw. 25 senkrecht ab. Diese sind so bemessen, dass sie an der Trennwand zwischen der Kammer 6 und der angrenzenden Kammer 9 bzw. an denjenigen Wandabschnitten der Kammer 6, welche die Oberseiten der Hinterschneidungen 5A, 5B bilden sind, zumindest annähernd anliegen. Hierdurch sorgen sie für eine Fixierung des Steckers 19 in vertikaler Richtung. Weitere drei Rippen 26 ragen senkrecht von dem unteren Quersteg 22 nach unten ab. Diese liegen jedoch nach dem Einstecken des Steckers 19 in eine Kammer 6 nicht an deren Wand an, da dies zur Fixierung des Steckers 19 nicht mehr nötig ist und nur eine Verspannung desselben zur Folge hätte. Die Funktion der Rippen 26 wird später noch erläutert werden.

Wie insbesondere aus den beiden perspektivischen Darstellungen in Fig. 5 ersichtlich ist, sind die Endbereiche des Steckers 19 abgeschrägt, und zwar sowohl an den Querstegen 21 und 22, als auch an den Rippen 24, 25 und 26. Diese Maßnahme dient dazu, das Einführen des Steckers 19 in eine Kammer 6 zu erleichtern.

Die Außenkontur der Grundplatte 18 in der Vorderansicht V entspricht teilweise der gemeinsamen Außenkontur des Querschnitts der Kammern 6 und 9 einschließlich der Wände, und zwar im Bereich der offenen Vorderseite des Isolierprofils 1 bis zu den Hinterschneidungen 5A, 5B der benachbarten offenen Kammern 2, denen entsprechende Ausschnitte 27 in der Grundplatte 18 zugeordnet sind. Abweichungen bestehen im vorderseitigen Endbereich des Isolierprofils 1, d.h. der vorspringenden Wandabschnitte 10, sowie in dem der Rückwand 8 zugewandten Bereich der Kammer 6.

Beim Einstecken eines Steckers 19 in ein Isolierprofil 1 kommt die Grundplatte 18 zum Anliegen an den Stirnflächen der Wände der Kammern 6 und 9 und bildet auf diese Weise einen Anschlag, der die Einstecktiefe begrenzt. Andererseits ragt die Grundplatte 18 nirgendwo seitlich über die Wände der Kammern 6 und 9 hinaus, also nicht in die Querschnitte der benachbarten offenen Kammern 2 oberhalb der Stromschienen 4 hinein, so dass diese Querschnitte, in denen sich die Stromabnehmer bewegen, durch das Einstecken eines Verbindungsglieds 17 nicht verändert werden und die Bewegung der Stromabnehmer nicht gestört wird.

Beim Einstecken eines Steckers 19 in eine Kammer 6 eines Isolierprofils 1 wird gleichzeitig ein Schnapphaken 20 des Verbindungsglieds 17 in die angrenzende Kammer 9 des Isolierprofils 1 eingeschoben. Die Länge der Schnapphaken 20 eines Verbindungsglieds 17 ist so bemessen, dass ein Schnapphaken 20 nach dem vollständigen Einstecken eines Steckers 19, d.h. beim Anschlagen der Grundplatte 18 an der Stirnfläche des Profils 1, in formschlüssigen Eingriff mit der Öffnung 16 in dem vorspringenden Wandabschnitt 10 der Kammer 9 gelangt, d.h. in diese Öffnung einschnappt. Hierdurch wird das Verbindungsglied 17 zuverlässig an dem Profil 1 fixiert.

Durch das Einfügen je eines Verbindungsglieds 17 in sämtliche Kammern 6 und 9 an der Stirnseite eines ersten Isolierprofils 1 und das anschließende Aufstecken eines zweiten Isolierprofils 1 auf die in das erste Isolierprofil 1 eingefügten Verbindungsglieder 17 können die beiden Isolierprofile 1 fest miteinander verbunden werden, und zwar so, dass sie in Längsrichtung miteinander fluchten und eine ungehinderte lineare Bewegung von Stromabnehmern in den offenen Kammern 2 über die Verbindungsstelle hinweg gewährleistet ist. Durch aufeinanderfolgendes Verbinden mehrerer Isolierprofile 1 unter Verwendung jeweils einer Reihe von Verbindungsgliedern 17 und anschließendes Einziehen von Stromschienen in die offenen Kammern 2 kann eine kompakte mehrpolige Schleifleitung beliebiger Länge hergestellt werden.

Es leuchtet ein, dass durch das Einfügen der Verbindungsglieder 17 die zu kurze Luftstrecke L_{M} (Fig. 1) an der Verbindungsstelle zwischen zwei Isolierprofilen 1 unterbrochen wird. Die Länge der Luft und Kriechstrecken an der Verbindungsstelle wird nun durch die Form des Verbindungsglieds 17 bestimmt. Unter der Annahme, dass ein Verbindungsglied 17 ungünstigstenfalls mit den Rändern der Ausschnitte 27 seiner Grundplatte 18 zwei benachbarte Stromschienen berühren kann, gibt es drei mögliche Kriechpfade zwischen zwei benachbarten Stromschienen auf der Oberfläche eines Verbindungsglieds 17.

Ein erster Kriechpfad K_{S1} verläuft unmittelbar auf Höhe der Stromschienen 4, d.h. an dem Verbindungsglied 17 auf Höhe der Ausschnitte 27 seiner Grundplatte 18 von der inneren Kante 30 eines Ausschnitts 27 auf der Grundplatte 18 zu dem Stecker 19, dann geradlinig in Längsrichtung des Steckers 19 an dessen Hauptsteg 23 bis zu dessen Ende, um dieses herum, auf der anderen Seite des Hauptstegs 23 zurück bis zur Grundplatte 18 und schließlich auf dieser bis zur inneren Kante 30 des gegenüberliegenden Ausschnitts 27. Teile dieses Kriechpfades sind in Fig. 5 eingezeichnet und hierbei in der Seitenansicht als K_{S1}' und in der Vorderansicht als K_{S1}" markiert, wobei K_{S2}" die gesamte Länge des in der Vorderansicht sichtbaren Teils bezeichnet. Für die Länge des Kriechpfades K_{S1} gilt: K_{S1} = 2·K_{S1}' + K_{S1}".

Die Verläufe des zweiten und des dritten Kriechpfades K_{S2} und K_{S3} sind anhand der Querschnittsansicht von Fig. 6 ersichtlich und dort durch dicke Linien markiert. Es existiert ein oberer Kriechpfad K_{S2}, der von einer oberen Ecke 28 des Ausschnitts 27 der Grundplatte 18 ausgeht. Auf dieser führt er etwa vertikal bis zum Ende des oberen Querstegs 21, dann schräg bis zum Ende der ersten oberen Rippe 24, dann horizontal bis zum Ende der zweiten oberen Rippe 24, wieder schräg bis zum entgegengesetzten Ende des oberen Querstegs 21 und schließlich wieder etwa vertikal bis zur oberen Ecke des gegenüberliegenden Ausschnitts 27.

Ferner existiert ein unterer Kriechpfad K_{S3}, der von einer unteren Ecke 29 des Ausschnitts 27 der Grundplatte 18 ausgeht. Auf dieser führt er vertikal bis zum Ende des unteren Querstegs 22, schräg bis zum Ende der ersten unteren Rippe 26, dann zur Unterseite des unteren Querstegs 22, dort um die mittlere untere Rippe 26 herum, weiter bis zum unteren Ende der dritten unteren Rippe 26, von dort wieder schräg auf der Grundplatte 18 bis zum entgegengesetzten Ende des unteren Querstegs 22 und schließlich wieder vertikal bis zu einer unteren Ecke des gegenüberliegenden Ausschnitts 27.

Da die Grundplatte 18 nach unten nicht über den unteren Quersteg 22 hinausreicht, sondern nur von außen an die beiden äußeren der unteren Rippen 26 heranreicht, folgt der untere Kriechpfad K_{S3} an der Unterseite des unteren Querstegs 22 zwischen den beiden äußeren der unteren Rippen 26 exakt dem Querschnitt der unteren Oberfläche des Steckers 19. Dies ist auf der Oberseite des oberen Querstegs 21 nicht der Fall, da hier die Grundplatte 18 deutlich über den oberen Quersteg 21 einschließlich der oberen Rippen 24 hinausreicht. Deshalb verläuft der Kriechpfad K_{S2} dort zwischen den Enden der beiden oberen Rippen 24 geradlinig, nämlich auf der Grundplatte 18.

Die Länge der Kriechstrecke auf der Oberfläche eines Verbindungsglieds 17 ist die Länge des kürzesten der drei Pfade K_{S1}, K_{S2} und K_{S3}. Dieser ist dann noch mit den Längen der Kriechpfade K_{V} und K_{R} (Fig. 1) auf der Stirnfläche des Isolierprofils 1 zu vergleichen, wobei wiederum der kürzeste aller Pfade das endgültige Maß für die Länge der insgesamt wirksamen Kriechstrecke ist, welche die einschlägigen Sicherheitsvorschriften erfüllen muß.

Die beiden Kriechpfade K_{S1} und K_{S2} fallen jeweils mit entsprechenden Luftwegen L_{S1} bzw. L_{S2} zusammen, da sie entlang ihres jeweiligen Verlaufs auch den jeweils kürzestmöglichen Weg im freien Raum zwischen zwei benachbarten Stromschienen 4 um das Verbindungsglied 17 herum darstellen. Zu vergleichen sind diese beiden Luftwege L_{S1}=K_{S1} und L_{S2}=K_{S2} mit einem dritten Luftweg L_{S3}, der ungefähr dem Kriechpfad K_{S3} entspricht, jedoch an der Unterseite des unteren Querstegs 22 etwas kürzer ist als dieser, da er dort direkt zwischen den unteren Enden der drei unteren Rippen 26 verläuft und keine Schleifen zurück zur Unterseite des unteren Querstegs 22 beinhaltet. Die kleinste der Längen der drei Luftwege L_{S1}, L_{S2} und L_{S3} ist das endgültige Maß für die Länge der insgesamt wirksamen Luftstrecke, welche die einschlägigen Sicherheitsvorschriften erfüllen muß. Es ist unmittelbar ersichtlich, dass diese Luftstrecke wesentlich länger ist als die ohne Vorhandensein des Verbindungsglieds 17 vorhandene, in Fig. 1 eingetragene Luftstrecke L_{M}.

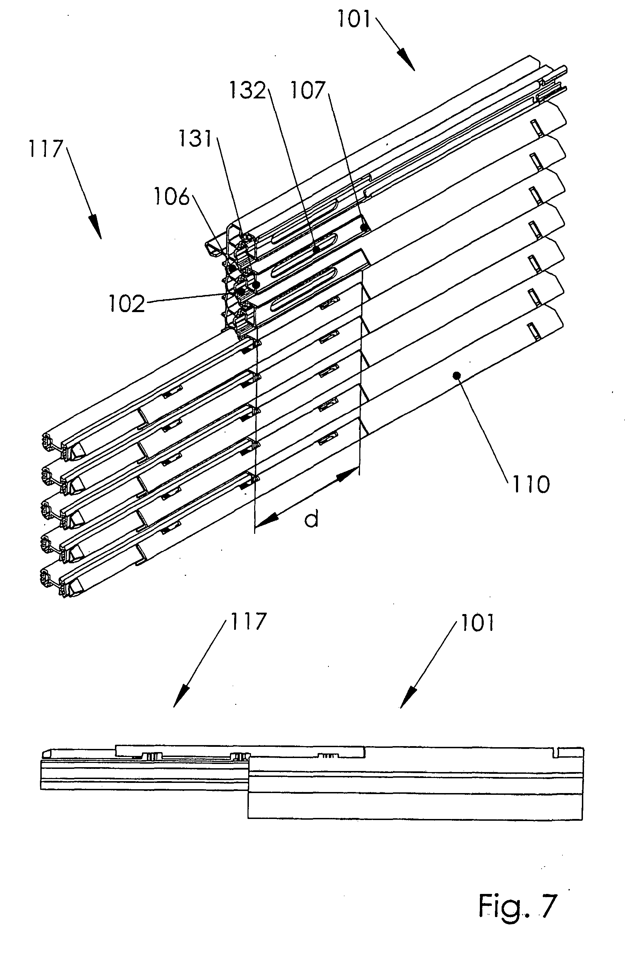

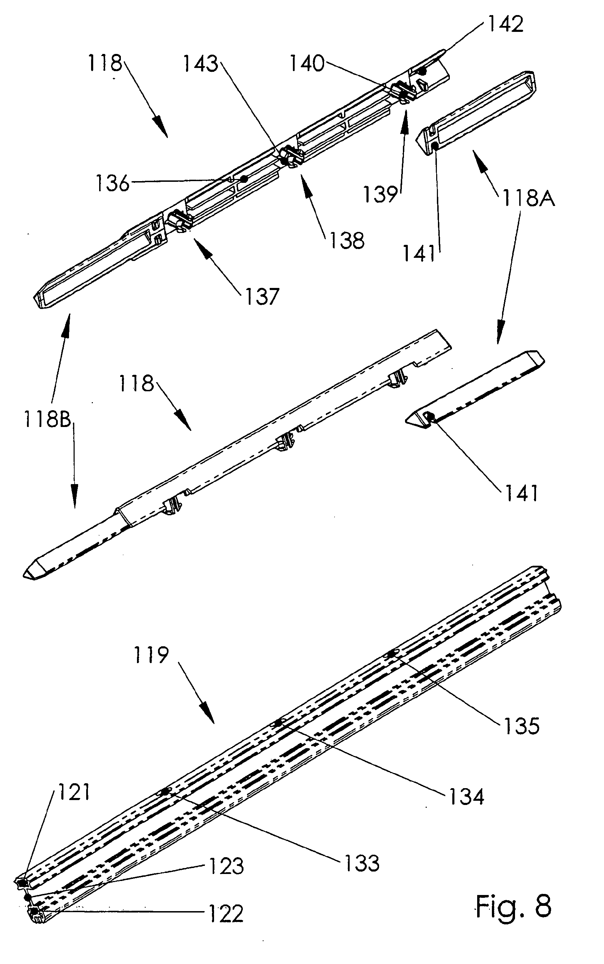

Das vorausgehend beschriebene Verbindungsglied 17 schafft eine feste Verbindung zwischen zwei aufeinanderfolgenden Isolierprofilen 1, die in Längsrichtung zumindest annähernd spielfrei ist. Wie eingangs erwähnt, ist zum Ausgleich der stark unterschiedlichen thermischen Ausdehnungskoeffizienten der Isolierprofile 1 und der Stromschienen 4 eine Verbindung nötig, die eine Relativbewegung bestimmten Ausmaßes in Längsrichtung zulässt und dabei ebenfalls die einschlägigen Isolationsvorschriften in Bezug auf Kriech- und Luftstrecken einhält. Nachfolgend wird anhand der Figuren 7 und 8 eine andere Ausführungsform der Erfindung erläutert, welche diese Anforderungen erfüllt.

Fig. 7 zeigt eine perspektivische Ansicht sowie eine Seitenansicht eines Isolierprofils 101, das eine Abwandlung des Isolierprofils 1 von Fig. 1 darstellt und sich von diesem lediglich durch eine Modifikation an einem seiner beiden Endbereiche unterscheidet, jedoch ansonsten exakt dieselbe Querschnittsform wie das Isolierprofil 1 der ersten Ausführungsform hat. In das Isolierprofil 101 eingesteckt ist in Fig. 7 ein Verbindungsglied 117 einer zweiten, mehrteiligen Art zu sehen, welches in Fig. 8 allein dargestellt ist. Dieses Verbindungsglied 117 ist mehrteilig und besteht aus einem Aufsatzelement 118, welches in Fig. 8 oben und in der Mitte in zwei verschiedenen perspektivischen Ansichten von unten bzw. von oben zu sehen ist, aus einem Steckelement 119, welches in Fig. 8 unten in einer perspektivischen Ansicht von der Seite zu sehen ist, sowie aus zwei Einlageelementen 118A und 118B, von denen in Fig. 8 oben und in der Mitte eines rechts neben dem Aufsatzelement 118 als separates Teil und eines mit dem Aufsatzelement 118 an dessen linkem Ende verbunden zu sehen ist.

Wie ein Vergleich von Fig. 8 unten mit Fig. 4, Fig. 5 und Fig. 6 erweist, ist in Analogie zur Anpassung der Querschnittsform des Steckers 19 an die Querschnittsform der geschlossenen Kammern 6 des Isolierprofils 1 auch die Querschnittsform des Steckelements 119 an die Querschnittsform der geschlossenen Kammern 106 des Isolierprofils 101, welche jeweils zwischen zwei offenen, mit Stromschienen 4 bestückten Kammern 102 liegen, dergestalt angepasst, dass das Steckelement 119 mit allenfalls geringem Spiel in eine geschlossene Kammer 106 eingesteckt werden kann, d.h. die Außenkontur des Querschnitts des Steckelements 119 entspricht bei der zweiten Ausführungsform annähernd der Innenkontur des Querschnitts der Kammer 106. Lediglich an seiner im eingesteckten Zustand der Rückseite des Isolierprofils 101 zugewandten Unterseite weicht die Außenkontur des Querschnitts des Steckelements 119 deutlich von der Innenkontur des Querschnitts der Kammer 106 ab und stimmt stattdessen annähernd mit der Kontur der Unterseite des Steckers 19 der ersten Ausführungsform überein, so dass der Kriechweg um die Unterseite des Steckelements 119 herum annähernd die gleiche Form hat wie der in Fig. 6 eingezeichnete Kriechweg K_{S3} um die Unterseite des Steckers 19.

Das Steckelement 119 weist ebenso wie der Stecker 19 einen Hauptsteg 123 auf. Im Gegensatz zu dem Stecker 19 sind jedoch anstelle der dortigen oberen und unteren Querstege 21 und 22 eine obere geschlossene Kammer 121 und eine untere geschlossene Kammer 122 vorhanden, die sich in Längsrichtung des Steckelements 119 erstrecken und durch den Hauptsteg 123 auf ihrer ganzen Länge miteinander verbunden sind. Diese geschlossenen Kammern 121 und 122 verleihen dem Steckelement 119 im Vergleich zu entsprechenden Querstegen eine höhere Steifigkeit, die vonnöten ist, weil das Verbindungsglied 117 im Gegensatz zu dem Verbindungsglied 17 eine als Dehnfuge fungierende Lücke zwischen zwei aufeinanderfolgenden Isolierprofilen 101 überbrücken und in diesem Bereich für ausreichende mechanische Stabilität sorgen muss. Aus diesem Grund ist das Steckelement 119 des Verbindungsgliedes 117 auch wesentlich länger als die beiden Stecker 19 eines Verbindungsgliedes 17 zusammen, da das Steckelement 119 in jedes der beiden Isolierprofile 101, die es miteinander verbinden soll, relativ weit hineinragen muss, um für eine ausreichende Stabilität der Verbindung zu sorgen. Dabei ist die Einstecktiefe im Gegensatz zu dem Stecker 19 des Verbindungsgliedes 17 zunächst nicht durch einen Anschlag begrenzt, da ein der dortigen Grundplatte 18 entsprechendes Element bei dem Steckelement 119 fehlt.

Wie in Fig. 7 zu erkennen ist, fehlt bei dem Isolierprofil 101 im Vergleich zu dem Isolierprofil 1 von einem stirnseitigen Ende aus entlang einer Strecke der Länge d die obere, dachförmige Wand 110 der geschlossenen Kammer 107, welche sich zur Vorderseite des Isolierprofils 101 hin an die geschlossene Kammer 106 anschließt. Hierdurch sind die Trennwände 131 zwischen den geschlossenen Kammern 106 und den jeweils darüber liegenden Kammern 107 entlang dieser Strecke freigelegt. In diesen Trennwänden 131 befinden sich jeweils Langlöcher 132, deren Längsrichtung der Längsrichtung des Isolierprofils 101 entspricht, und die über die gesamte Breite des Isolierprofils 101 in jeweils gleicher Entfernung von der Stirnseite desselben angeordnet sind.

Die Steckelemente 119 weisen jeweils an der Oberseite ihrer oberen Kammer 121 Bohrungen 133 bis 135 auf. Durch das Einstecken eines Steckelementes 119 in eine geschlossene Kammer 106 des Isolierprofils 101 kann eine der beiden äußeren Bohrungen 133 oder 135 des Steckelements 119 in eine Position gebracht werden, in der sie von einem Langloch 132 in der Trennwand 131 des Isolierprofils 101 überdeckt wird.

Wenn das Steckelement 119 in eine geschlossene Kammer 106 des Isolierprofils 101 so weit eingesteckt ist, dass die äußere Bohrung 135 von dem Langloch 132 überdeckt wird und es gleichzeitig mit seinem entgegengesetzten Ende in ein anderes, gleichartiges Isolierprofil 101 so weit eingesteckt ist, dass die andere äußere Bohrung 133 von einem dortigen Langloch 132 des anderen Isolierprofils 101 überdeckt wird, dann kann durch Hinzufügung des zugleich die Funktionen einer Verrastung und eines Anschlags erfüllenden Aufsatzelementes 118 eine feste, jedoch in Längsrichtung der Isolierprofile 101 in vorbestimmtem Ausmaß bewegliche Verbindung zwischen den beiden Isolierprofilen 101 geschaffen werden, wie nachfolgend erläutert wird.

Das Aufsatzelement 118 besteht aus einem länglichen Hauptteil 136 und drei von diesem senkrecht nach unten abragenden Eingriffselementen 137 bis 139. Die Form der Oberseite des Hauptteils 136 entspricht derjenigen der vorderen Wand 110 der geschlossenen Kammer 107. Jedes der Eingriffselemente 137 bis 139 ist einer der Bohrungen 133 bis 135 in dem Steckelement 119 zugeordnet und umfasst mindestens zwei von dem Hauptteil 136 des Aufsatzelementes 118 aus senkrecht nach unten abragende Schnapphaken 140, die jeweils einen kreissegmentförmigen Querschnitt haben, so dass sich für die Eingriffselemente 137 bis 139 insgesamt ein näherungsweise kreisförmiger Querschnitt ergibt. Rein beispielhaft sind in Fig. 8 Eingriffselemente 137 bis 139 mit je vier Schnapphaken dargestellt. Die äußeren Eingriffselemente 137 und 139 sind dazu bestimmt, nach dem Einstecken des Steckelementes 119 in die jeweiligen geschlossenen Kammern 106 zweier aufeinanderfolgender Isolierprofile 101 durch die Langlöcher 132 in den Trennwänden 131 der beiden Isolierprofile 101 hindurch in die darunter befindlichen äußeren Bohrungen 133 bzw. 135 des Steckelementes 119 eingeführt zu werden.

Bevor dies geschieht, wird jedoch in jedes der beiden zu verbindenden Isolierprofilen 101 ein Einlageelement 118A bzw. 118B eingelegt. Diese Einlageelemente 118A und 118B haben eine an die Innenkontur der geschlossenen Kammern 107 eines Isolierprofils 101 angepasste Querschnittsform, die es gestattet, sie jeweils spielarm in eine solche geschlossene Kammer 107 einzuführen. An einem Ende weist jedes Einlageelement 118A und 118B jeweils zwei Ausschnitte 141 auf, die zum formschlüssigen Eingriff mit zwei dazu passenden Vorsprüngen 142 an der Unterseite des Hauptteils 136 des Aufsatzelementes 118 geeignet sind. Die Einlageelemente 118A und 118B werden nach dem Einstecken der Steckelemente 119 auf die Trennwände 131 der zu verbindenden Isolierprofile 101 gelegt und jeweils so weit in deren geschlossene Kammern 107 eingeschoben, dass sich die Ausschnitte 141 an einer Stelle befinden, an der sie beim anschließenden Einführen der Eingriffselemente 137 und 139 des Aufsatzelementes 118 in die Bohrungen 133 bzw. 135 des Steckelementes 119 mit den Vorsprüngen 142 in Eingriff gelangen. Durch diesen Eingriff werden die Einlageelemente 118A und 118B gegenüber dem Aufsatzelement 118 in Längsrichtung fixiert. Die Einlageelemente 118A und 118B halten den Bereich, in dem die Außenwand 110 einer geschlossenen Kammer 107 fehlt, unabhängig von der in Längsrichtung variablen Position des Aufsatzelementes 118 gegenüber dem Isolierprofil 101 stets abgedeckt und sorgen in diesem Bereich für eine annähernde Kontinuität der Form der Vorderseite des Isolierprofils 101.

Beim Einführen der Eingriffselemente 137 und 139 des Aufsatzelementes 118 in die Bohrungen 133 bzw. 135 des Steckelementes 119 wird gleichzeitig das mittlere Eingriffselement 138 in die darunter befindliche mittlere Bohrung 134 des Steckelementes 119 eingeführt, allerdings ohne dabei eines der beiden zu verbindenden Isolierprofile 101 zu durchdringen. Vielmehr besteht nach dem Einstecken des Steckelementes 119 in die beiden zu verbindenden Isolierprofile 101 bis in eine zur Hinzufügung des Aufsatzelementes 118 geeignete Tiefe zwischen den beiden Isolierprofilen 101 noch ein Zwischenraum, dessen Weite mindestens dem Durchmesser der mittleren Bohrung 134 in dem Steckelement 119 entspricht.

Beim Einführen der drei Eingriffselemente 137 bis 139 in die Bohrungen 133 bis 135 des Steckelementes 119 gelangen die Schnapphaken 140 aller drei Eingriffselemente 137 bis 139 in formschlüssigen Eingriff mit dem Steckelement 119, wodurch das Aufsatzelement 118 insgesamt fest mit dem Steckelement 119 verrastet wird. Gleichzeitig wird dabei durch jedes der beiden äußeren Eingriffselemente 137 und 139 jeweils eine formschlüssige Verbindung zwischen dem zweiteiligen Verbindungsglied 117 und jedem der beiden zu verbindenden Isolierprofile 101 geschaffen, indem die Trennwand 131 des Isolierprofils 101 jeweils zwischen dem Steckelement 119 und dem Aufsatzelement 118 des Verbindungselements 117 eingeklemmt wird. Danach ist jedoch noch eine Relativbewegung zwischen jedem der beiden Isolierprofile 101 und dem Verbindungselement 117 in Längsrichtung möglich, indem jedes äußere Eingriffselement 137 und 139 in dem Langloch 132 in der Trennwand 131, in dem es sich befindet, in Längsrichtung desselben verschoben werden kann.

Während die der Mitte des Aufsatzelementes 118 zugewandten Schnapphaken 140 eines Eingriffselementes 137 bzw. 139 durch ihren Eingriff mit dem zwischen dem Langloch 132 und dem stirnseitigen Ende des jeweiligen Isolierprofils 101 gelegenen Abschnitt der Trennwand 131 des Isolierprofils 101 am äußeren Ende des Langlochs 132 verhindern, dass das Verbindungsglied 117 in Längsrichtung von dem Isolierprofil 101 abgezogen werden kann, wird der Bewegungsbereich des Verbindungsgliedes 117 in der entgegengesetzten Richtung vorzugsweise nicht durch einen entsprechenden Eingriff der beiden anderen Schnapphaken 140 desselben Eingriffselementes 137 bzw. 139 mit der Trennwand 131 des Isolierprofils 101 am entgegengesetzten Ende des Langlochs 132 begrenzt, obwohl dies grundsätzlich möglich wäre.

Vielmehr ist die Länge des Langlochs 132 vorzugsweise so bemessen, dass die beiden durch das Verbindungsglied 117 verbundenen Isolierprofile 101 so weit aufeinander zu geschoben werden könnten, bis ihre Stirnflächen aufeinanderstoßen würden. Letzteres wird jedoch durch den Hauptteil 136 des Aufsatzelementes 118 verhindert, der länger ist als das Doppelte der Länge d der Strecke, auf der die obere, dachförmige Wand 110 der geschlossenen Kammer 107 fehlt. Der Hauptteil 136 wirkt somit als Anschlag, welcher die beiden Isolierprofile 101 in einem vorbestimmten Mindestabstand voneinander hält.

Die Schnapphaken 140 des mittleren Eingriffselementes 138 haben eine etwas andere Form als diejenigen der beiden äußeren Eingriffselemente 137 und 139, d.h. sie sind zur Mitte des Aufsatzelementes 118 hin nicht ganz abgerundet, sondern sie sind dort jeweils mit einer ausgeprägten Kante 143 versehen. Der Zweck dieser Maßnahme besteht darin, bei einer Kontraktionsbewegung der Dehnfuge Staub und Abrieb, der sich im Laufe der Zeit in diesem Bereich ablagern kann, beiseite zu schieben.

Es leuchtet ein, dass der durch das Verbindungselement 117 geschaffene Bewegungsbereich zwischen zwei aufeinanderfolgenden Isolierprofilen 101 in Längsrichtung bei geeigneter Dimensionierung zum Ausgleich unterschiedlicher thermischer Längenausdehnungen der Isolierprofile 101 und der Stromschienen 4, d.h. zur Bereitstellung von Dehnfugen für eine Schleifleitung geeignet ist. Da die dehnfähigen Verbindungen unter Verwendung von Isolierprofilen 101 und Verbindungsgliedern 117 der zuletzt beschriebenen Art sowohl hinsichtlich der Formgebung der beteiligten Komponenten als auch des Ablaufs der Montage komplizierter sind als die nicht dehnfähigen Verbindungen unter Verwendung von Isolierprofilen 1 und Verbindungsgliedern 17 der zuvor beschriebenen Art, wird man entlang einer Schleifleitung zweckmäßigerweise nur so viele dehnfähige Verbindungen in regelmäßigen Abständen vorsehen, wie es zum Ausgleich der zu erwartenden Längenausdehnungen insgesamt erforderlich ist, und für die übrigen Verbindungen die einfachere, nicht dehnfähige Variante einsetzen.

Aus der vorausgehenden Beschreibung eines Ausführungsbeispiels ergeben sich für den Fachmann eine Vielzahl von Variationsmöglichkeiten in der Gestaltung des Querschnitts des Isolierprofils 1 und der Form des Verbindungsglieds 17. Was den Stecker 19 der ersten Ausführungsform anbelangt, so muss dessen Querschnittsgrundform nicht unbedingt dem Großbuchstaben I entsprechen, sondern die Querstege 21 und 22 könnten auch schräg gegenüber dem Hauptsteg 23 verlaufen, so daß die obere Hälfte eine dem Großbuchstaben Y entsprechende Querschnittsgrundform hätte und/oder die untere Hälfte eine demgegenüber um 180° gedrehte Querschnittsgrundform. Selbstverständlich kann auch die Anzahl, Lage und Höhe der Rippen 25, 25 und 26 je nach Bedarf variiert werden. Auch bei dem Steckelement 119 der zweiten Ausführungsform bestehen entsprechende Variationsmöglichkeiten. Entscheidend ist stets, dass es aufgrund seiner Querschnittsform und seiner Länge für eine ausreichende Kriechweglänge auf seiner Oberfläche entlang jedes möglichen Pfades zwischen benachbarten Stromschienen sorgt.

## Patentansprüche

1. Mehrpolige Schleifleitung mit einer Vielzahl von in Längsrichtung hintereinander angeordneten Isolierprofilen (1; 101), die jeweils eine regelmäßige Anordnung von mehreren sich in Längsrichtung erstreckenden Kammern (2; 102, 6; 106, 7; 107) aufweisen, wobei mindestens eine Gruppe von Kammern (6; 106, 7; 107) vorhanden ist, die im Querschnitt geschlossen sind, und mindestens eine Gruppe von Kammern (2; 102) vorhanden ist, die im Querschnitt nach einer Seite hin offen und zur Halterung jeweils einer Stromschiene (4) geeignet sind, **dadurch gekennzeichnet, dass** zur stirnseitigen Verbindung der Isolierprofile (1; 101) Verbindungsglieder (17; 117) aus isolierendem Material vorgesehen sind, die als Bestandteile jeweils mindestens ein Steckelement (19; 119), welches an der Stirnseite eines Isolierprofils (1; 101) in eine geschlossene Kammer (6) des Isolierprofils (1; 101) einsteckbar ist, und mindestens ein Anschlagelement (18;118), welches die Einstecktiefe eines Steckelements (19; 119) in einem Isolierprofil (1; 101) begrenzt, aufweisen.

2. Schleifleitung nach Anspruch 1, **dadurch gekennzeichnet, dass** die minimale Länge eines auf der Oberfläche eines Verbindungsgliedes (17; 117) verlaufenden Pfades, der von einem ersten Punkt auf der Oberfläche des Steckelementes (19; 119), welcher im vorgesehenen Einbauzustand des Verbindungsgliedes (17; 117) zwischen zwei Isolierprofilen (1) einer ersten Stromschiene (4) am nächsten liegt, zu einem zweiten Punkt auf der Oberfläche des Verbindungsgliedes (17; 117) führt, welcher einer anderen Stromschiene (4) am nächsten liegt, eine vorbestimmte Mindestlänge hat.

3. Schleifleitung nach Anspruch 1 oder 2, **dadurch gekennzeichnet, dass** das Verbindungsglied (17; 117) mindestens ein Rastelement (20; 137, 139), durch welches ein formschlüssiger Eingriff zwischen dem Verbindungsglied (17; 117) und einem Isolierprofil (1; 101) herstellbar ist, aufweist.

4. Schleifleitung nach einem der Ansprüche 1 bis 3, **dadurch gekennzeichnet, dass** das Verbindungsglied (17) als Anschlagelement (18) eine Grundplatte und als Steckelemente (19) zwei von der Grundplatte (18) symmetrisch zu deren Mittelebene senkrecht abragende Stecker (19) aufweist, wobei die Grundplatte (18) so geformt ist, dass sie beim Einstecken eines Steckers (19) in ein Isolierprofil (1) an dessen Stirnfläche zum Anliegen kommt, ohne dabei in den Querschnitt einer offenen Kammer (2) des Isolierprofils (1) hineinzuragen.

5. Schleifleitung nach Anspruch 4, **dadurch gekennzeichnet, dass** die äußere Kontur der Grundplatte (18) des Verbindungsgliedes (17) zumindest teilweise derjenigen der Wand einer geschlossenen Kammer (6) des Isolierprofils (1) entspricht und zwei zueinander symmetrische Ausschnitte (27) aufweist, die in ihrer Form Hinterschneidungen (5A, 5B) entsprechen, die zur Halterung der Stromschienen (4) als Bestandteile der offenen Kammern (2) vorgesehen sind.

6. Schleifleitung nach Anspruch 5, **dadurch gekennzeichnet, dass** die Länge des kürzesten um das freie Längsende eines Steckers (19) des Verbindungsgliedes (17) herum zwischen den jeweiligen inneren Kanten (30) der beiden Ausschnitte (27) der Grundplatte (18) verlaufenden Pfades zumindest annähernd der kürzesten Strecke auf der Oberfläche der offenen Vorderseite des Isolierprofils (1) zwischen den Hinterschneidungen (5A, 5B) zweier benachbarter offener Kammern (2) entspricht oder diese überschreitet.

7. Schleifleitung nach Anspruch 5 oder 6, **dadurch gekennzeichnet, dass** die Länge des kürzesten auf der Grundplatte (18) des Verbindungsgliedes (17) um den Stecker (19) herum entweder zwischen den jeweiligen äußeren oberen Ecken (28) oder zwischen den jeweiligen äußeren unteren Ecken (29) der beiden Ausschnitte (27) der Grundplatte (18) verlaufenden Pfades zumindest annähernd der Länge der kürzesten Strecke auf der Oberfläche der offenen Vorderseite des Isolierprofils (1) zwischen den Hinterschneidungen (5A, 5B) zweier benachbarter offener Kammern (2) entspricht.

8. Schleifleitung nach einem der Ansprüche 4 bis 7, **dadurch gekennzeichnet, dass** das Verbindungsglied (17) als Rastelemente (20) zwei von der Grundplatte (18) symmetrisch zu deren Mittelebene senkrecht abragende Schnapphaken (20) aufweist, wobei diese so geformt und angeordnet sind, dass beim Einstecken eines Steckers (19) in ein Isolierprofil (1) bis zum Anliegen der Grundplatte (18) an der Stirnfläche des Isolierprofils (1) der zugehörige Schnapphaken (20) in formschlüssigen Eingriff mit einer Öffnung (16) in einem Wandabschnitt (10) an der Vorderseite des Isolierprofils (1), von welcher aus die Stromschienen (4) zugänglich sind, gelangt.

9. Schleifleitung nach Anspruch 8, **dadurch gekennzeichnet, dass** die Schnapphaken (20) des Verbindungsgliedes (17) an der Grundplatte (18) so angeordnet sind, dass beim Einstecken eines Steckers (19) in ein Isolierprofil (1) der zugehörige Schnapphaken (20) in eine geschlossene Kammer (9) des Isolierprofils (1) gelangt und der formschlüssige Eingriff mit der Öffnung (16) vom Inneren der geschlossenen Kammer (9) her erfolgt.

10. Schleifleitung nach Anspruch 3, **dadurch gekennzeichnet, dass** der formschlüssige Eingriff zwischen dem Verbindungsglied (117) und einem Isolierprofil (101) eine reversible Relativbewegung vorbestimmten Ausmaßes zwischen dem Verbindungsglied (117) und dem Isolierprofil (101) in Längsrichtung des Isolierprofils (101) erlaubt.

11. Schleifleitung nach Anspruch 10, **dadurch gekennzeichnet, dass** das Verbindungsglied (117) aus mindestens zwei verschiedenen Bauteilen (118, 119) besteht, von denen eines das Steckelement (119) und ein anderes das Anschlagelement (118) bildet, und dass die beiden Bauteile (118, 119) des Verbindungsgliedes (117) formschlüssig zugleich miteinander und mit mindestens einem Isolierprofil (101) verbindbar sind.

12. Schleifleitung nach Anspruch 11, **dadurch gekennzeichnet, dass** das Isolierprofil (101) nahe einem stirnseitigen Ende in Wänden (131) solcher geschlossener Kammern (106), in welche jeweils ein Steckelement (119) eines Verbindungsgliedes (117) einsteckbar ist, von außen zugängliche, sich in Längsrichtung des Isolierprofils (101) erstreckende Öffnungen (132) aufweist, durch welche jeweils nach Herstellung der formschlüssigen Verbindung der beiden Bauteile (118, 119) des Verbindungsgliedes (117) ein an diesem vorgesehenes Eingriffselement (137, 139) hindurchragt, wobei die Abmessung des Eingriffselementes (137, 139) in Längsrichtung des Isolierprofils (101) geringer ist als die Länge einer Öffnung (132).

13. Schleifleitung nach Anspruch 12, **dadurch gekennzeichnet, dass** das Steckelement (119) des Verbindungsgliedes (117) mehrere in Längsrichtung des Steckelementes (119) hintereinander angeordnete Öffnungen (133, 134, 135) aufweist, von denen mindestens eine durch das Einstecken des Steckelementes (119) in das Isolierprofil (101) in eine Position versetzbar ist, in der sie von der von außen zugänglichen Öffnung (132) in der Wand (131) der geschlossenen Kammer (106), in welche das Steckelement (119) eingesteckt ist, in Längsrichtung überdeckt wird, und dass in dieser Position des Steckelementes (119) ein von einem anderen Bauteil (118) des Verbindungsgliedes (117) abragendes Eingriffselement (137, 139) durch die Öffnung (132) in der Wand (131) der geschlossenen Kammer (106) hindurch in die von dieser überdeckte Öffnung (133, 135) des Steckelementes (119) einführbar und dort formschlüssig mit dem Steckelement (119) verrastbar ist.

14. Schleifleitung nach Anspruch 13, **dadurch gekennzeichnet, dass** ein Eingriffselement (137, 139) des zweiten Bauteils (118) mehrere zur Bildung einer Schnappverbindung mit einer Öffnung (133, 134, 135) des Steckelementes (119) geeignete Schnapphaken (140) aufweist.

15. Schleifleitung nach Anspruch 13 oder 14, **dadurch gekennzeichnet, dass** das andere Bauteil (118) einen Hauptteil (136) aufweist, welcher im fertig mit zwei aufeinanderfolgenden Isolierprofilen (101) montierten Zustand des Verbindungsgliedes (117) einen Anschlag bildet, der die Stirnseiten der zwei Isolierprofile (101) unabhängig von den Positionen und Abmessungen der Eingriffselemente (137, 139) sowie der Öffnungen (132) in den Isolierprofilen (101) in einem vorbestimmten Mindestabstand hält.

16. Schleifleitung nach einem der Ansprüche 10 bis 15, **dadurch gekennzeichnet, dass** im fertig mit zwei aufeinanderfolgenden Isolierprofilen (101) montierten Zustand eines Verbindungsgliedes (117) die minimale Länge eines auf der Oberfläche eines Steckelementes (119) verlaufenden Pfades, der von einem ersten Punkt auf der Oberfläche des Steckelementes (119), der einer ersten Stromschiene (4) am nächsten liegt, zu einem zweiten Punkt auf der Oberfläche des Steckelementes (119) führt, der einer anderen Stromschiene (4) am nächsten liegt, in jeder Position des Verbindungsgliedes (117) innerhalb dessen in Längsrichtung der Isolierprofile (101) bestehenden Bewegungsbereiches eine Länge hat, die mindestens so groß wie die Länge des kürzesten Pfades zwischen zwei Punkten auf der Stirnseite des Isolierprofils (101) ist, von denen der erste einer ersten Stromschiene (4) am nächsten liegt und der zweite einer anderen Stromschiene (4) am nächsten liegt.

## Claims

1. Multi-pole conductor line with a plurality of insulating profiles (1; 101), which are arranged one behind the other in the longitudinal direction and each of which has a regular arrangement of a plurality of chambers (2; 102, 6; 106, 7; 107) extending in the longitudinal direction, wherein at least one group of chambers (6; 106, 7; 107) is present, which are closed in cross section, and at least one group of chambers (2; 102) is present, which are open to one side in cross section and each of which is suitable for holding a busbar (4), **characterised in that** for the end face connection of insulating profiles (1; 101), connection elements (17; 117) made of insulating material are provided, each of which has, as components, at least one plug element (19; 119) that can be inserted on the end face of an insulating profile (1; 101) into a closed chamber (6) of the insulating profile (1; 101), and at least one stop element (18; 118) that limits the insertion depth of a plug element (19; 119) in an insulating profile (1; 101).

2. Conductor line according to claim 1, **characterised in that** the minimum length of a path, which runs on the surface of a connection element (17; 117) and leads from a first point on the surface of the plug element (19; 119), which, in the provided installation state of the connection element (17; 117) between two insulating profiles (1), lies closest to a first busbar (4), to a second point on the surface of the connection element (17; 117), which lies closest to another busbar (4), has a predetermined minimum length.

3. Conductor line according to claim 1 or 2, **characterised in that** the connection element (17; 117) has at least one catch element (20; 137, 139), by means of which a form-fit engagement between the connection element (17; 117) and an insulating profile (1; 101) can be produced.

4. Conductor line according to any one of claims 1 to 3, **characterised in that** the connection element (17) has, as a stop element (18), a base plate and, as plug elements (19), two plugs (19) projecting vertically from the base plate (18) symmetrically to its centre plane, wherein the base plate (18) is formed in such a way that when a plug (19) is inserted into an insulating profile (1), it abuts its end face, without projecting here into the cross section of an open chamber (2) of the insulating profile (1).

5. Conductor line according to claim 4, **characterised in that** the outer contour of the base plate (18) of the connection element (17) at least partially corresponds to that of the wall of a closed chamber (6) of the insulating profile (1) and has two cutouts (27) that are symmetrical to each other and correspond in their shape to undercuts (5A, 5B), which are provided to hold the busbars (4) as components of the open chambers (2).

6. Conductor line according to claim 5, **characterised in that** the length of the shortest path running around the free longitudinal end of a plug (19) of the connection element (17) between the respective inner edges (30) of the two cutouts (27) of the base plate (18) at least approximately corresponds to the shortest path on the surface of the open front side of the insulating profile (1) between the undercuts (5A, 5B) of two adjacent open chambers (2) or exceeds it.

7. Conductor line according to claim 5 or 6, **characterised in that** the length of the shortest path running on the base plate (18) of the connection element (17) around the plug (19) either between the respective outer upper corners (28) or between the respective outer lower corners (29) of the two cutouts (27) of the base plate (18) at least approximately corresponds to the length of the shortest path on the surface of the open front side of the insulating profile (1) between the undercuts (5A, 5B) of two adjacent open chambers (2).

8. Conductor line according to any one of claims 4 to 7, **characterised in that** the connection element (17) has, as catch elements (20), two snap hooks (20) projecting vertically from the base plate (18) symmetrically to its centre plane, wherein these are shaped and arranged so that, when a plug (19) is inserted into an insulating profile (1) until the base plate (18) abuts the end face of the insulating profile (1), the associated snap hook (20) is brought into form-fit engagement with an opening (16) in a wall portion (10) on the front side of the insulating profile (1), from which the busbars (4) are accessible.

9. Conductor line according to claim 8, **characterised in that** the snap hooks (20) of the connection element (17) are arranged on the base plate (18) in such a way that when a plug (19) is inserted into an insulating profile (1), the associated snap hook (20) is brought into a closed chamber (9) of the insulating profile (1) and the form-fit engagement with the opening (16) is realised from inside the closed chamber (9).

10. Conductor line according to claim 3, **characterised in that** the form-fit engagement between the connection element (117) and an insulating profile (101) allows a reversible relative movement of a predetermined extent between the connection element (117) and the insulating profile (101) in the longitudinal direction of the insulating profile (101).

11. Conductor line according to claim 10, **characterised in that** the connection element (117) consists of at least two different components (118, 119), of which one forms the plug element (119) and another forms the stop element (118), and **in that** the two components (118, 119) of the connection element (117) can be simultaneously connected to each other with a form fit and can be connected to at least one insulating profile (101).

12. Conductor line according to claim 11, **characterised in that** the insulating profile (101) has, close to one end face in walls (131) of such closed chambers (106), in which a plug element (119) of a connection element (117) can be inserted in each case, openings (132), which are accessible from the outside and extend in the longitudinal direction of the insulating profile (101) and through each of which, after production of the form-fit connection of the two components (118, 119) of the connection element (117), an engagement element (137, 139) provided on the latter projects, wherein the dimension of the engagement element (137, 139) in the longitudinal of the insulating profile (101) is less than the length of an opening (132).

13. Conductor line according to claim 12, **characterised in that** the plug element (119) of the connection element (117) has a plurality of openings (133, 134, 135) arranged behind each other in the longitudinal direction of the plug element (119), of which at least one can be placed by the insertion of the plug element (119) into the insulating profile (101) in a position, in which it is covered in the longitudinal direction by the opening (132) accessible from the outside in the wall (131) of the closed chamber (106), in which the plug element (119) is inserted and **in that**, in this positon of the plug element (119), an engagement element (137, 139) projecting from another component (118) of the connection element (117) can be inserted through the opening (132) in the wall (131) of the closed chamber (106) into the opening (133, 135) of the plug element (119) covered by this and can be locked there in a form-fit connection with the plug element (119).

14. Conductor line according to claim 13, **characterised in that** an engagement element (137, 139) of the second component (118) has a plurality of snap hooks (140) suitable for forming a snap connection with an opening (133, 134, 135) of the plug element (119).

15. Conductor line according to claim 13 or 14, **characterised in that** the other component (118) has a main part (136) that forms, in the state of the connection element (117) completely assembled with two successive insulating profiles (101), a stop that keeps the end faces of the two insulating profiles (101) at a predetermined minimum spacing independently of the positions and dimensions of the engagement elements (137, 139) and of the openings (132) in the insulating profiles (101).

16. Conductor line according to any one of claims 10 to 15, **characterised in that**, in the state of a connection element (117) completely assembled with two successive insulating profiles (101), the minimum length of a path, which runs on the surface of a plug element (119) and which leads from a first point on the surface of the plug element (119), said point lying closest to a first busbar (4), to a second point on the surface of the plug element (119), said point lying closest to another busbar (4), has, in each position of the connection element (117) within its movement range in the longitudinal direction of the insulating profiles (101), a length being at least as great as the length of the shortest path between two points on the end face of the insulating profile (101), of which the first point lies closest to a first busbar (4) and the second lies closest to another busbar (4).

## Revendications

1. Ligne de contact multipolaire comprenant une pluralité de profils isolants (1 ; 101) disposés les uns derrière les autres dans la direction longitudinale, lesquels présentent respectivement un alignement régulier de plusieurs compartiments (2 ; 102, 6 ; 106, 7 ; 107) s'étendant dans la direction longitudinale, sachant qu'au moins un groupe de compartiments (6 ; 106, 7 ; 107) est présent, lesquels sont fermés dans la section transversale, et sachant qu'au moins un groupe de compartiments (2 ; 102) est présent, lesquels sont ouverts en direction d'un côté dans la section transversale et sont adaptés pour la fixation respectivement d'un rail conducteur (4), **caractérisée en ce que** sont prévus, aux fins de l'assemblage côté frontal des profils isolants (1 ; 101), des organes d'assemblage (17 ; 117) constitués d'un matériau isolant, lesquels présentent respectivement en tant que composants au moins un élément d'enfichage (19 ; 119), qui peut être enfiché au niveau du côté frontal d'un profilé isolant (1 ; 101) dans un compartiment fermé (6) du profilé isolant (1 ; 101), et moins un élément de butée (18 ; 118), qui délimite la profondeur d'enfichage d'un élément d'enfichage (19 ; 119) dans un profilé isolant (1 ; 101).

2. Ligne de contact selon la revendication 1, **caractérisée en ce que** la longueur minimale d'un trajet s'étendant sur la surface d'un organe d'assemblage (17 ; 117) présente une longueur minimale prédéterminée, lequel trajet menant depuis un premier point sur la surface de l'élément d'enfichage (19 ; 119), lequel point se trouve à proximité immédiate, lorsque l'organe d'assemblage (17 ; 117) se trouve dans l'état de montage prévu, entre deux profilés isolants (1) d'une première ligne de contact (4), vers un deuxième point sur la surface de l'organe d'assemblage (17 ; 117), lequel point se trouve à proximité immédiate d'un autre rail conducteur (4).

3. Ligne de contact selon la revendication 1 ou 2, **caractérisée en ce que** l'organe d'assemblage (17 ; 117) présente au moins un élément d'enclenchement (20 ; 137, 139), par lequel il est possible d'établir un engrènement par complémentarité de forme entre l'organe d'assemblage (17 ; 117) et un profilé isolant (1 ; 101).

4. Ligne de contact selon l'une quelconque des revendications 1 à 3, **caractérisée en ce que** l'organe d'assemblage (17) présente, en tant qu'élément de butée (18), une plaque de base et, en tant qu'éléments d'enfichage (19), deux connecteurs (19) dépassant de la plaque de base (18) de manière symétrique par rapport au plan médian de cette dernière, sachant que la plaque de base (18) est formée de telle manière qu'elle vient en appui, lorsqu'un connecteur (19) est enfiché dans un profilé isolant (1), contre la surface frontale de ce dernier sans, ce faisant, faire saillie dans la section transversale d'un compartiment (2) ouvert du profilé isolant (1).

5. Ligne de contact selon la revendication 4, **caractérisée en ce que** le contour extérieur de la plaque de base (18) de l'organe d'assemblage (17) correspond au moins en partie au contour de la paroi d'un compartiment (6) fermé du profilé isolant (1) et présente deux découpes (27) symétriques l'une par rapport à l'autre, lesquelles correspondent dans leur forme à des contre-dépouilles (5A, 5B), qui sont prévues aux fins de la fixation des rails conducteurs (4) en tant que composants des compartiments (2) ouverts.

6. Ligne de contact selon la revendication 5, **caractérisée en ce que** la longueur du trajet le plus court s'étendant tout autour de l'extrémité libre longitudinale d'un connecteur (19) de l'organe d'assemblage (17), entre les arêtes (30) intérieures respectives des deux découpes (27) de la plaque de base (18), correspond au moins de manière approximative au tronçon le plus court sur la surface du côté avant ouvert du profilé isolant (1) entre les contre-dépouilles (5A, 5B) de deux compartiments (2) ouverts adjacents ou est plus grande que ledit tronçon.

7. Ligne de contact selon la revendication 5 ou 6, **caractérisée en ce que** la longueur du trajet le plus court sur la plaque de base (18) de l'organe d'assemblage (17) tout autour du connecteur (19) s'étendant soit entre les angles supérieurs (28) extérieurs respectifs soit entre les angles inférieurs (29) extérieurs respectifs des deux découpes (27) de la plaque de base (18) correspond au moins de manière approximative à la longueur du tronçon le plus court sur la surface du côté avant ouvert du profilé isolant (1) entre les contre-dépouilles (5A, 5B) de deux compartiments (2) ouverts adjacents.

8. Ligne de contact selon l'une quelconque des revendications 4 à 7, **caractérisée en ce que** l'organe d'assemblage (17) présente en tant qu'éléments d'enclenchement (20) deux crochets à déclic (20) dépassant de la plaque de base (18) perpendiculairement, de manière symétrique par rapport au plan médian de cette dernière, sachant que lesdits crochets à déclic sont formés et disposés de telle manière que, lorsqu'un connecteur (19) est enfiché dans un profilé isolant (1) jusqu'à faire venir en appui la plaque de base (18) au niveau de la face frontale du profilé isolant (1), le crochet à déclic (20) associé parvient en engrènement par complémentarité de forme avec une ouverture (16) dans une section de paroi (10) au niveau du côté avant du profilé isolant (1), depuis lequel les rails conducteurs (4) sont accessibles.

9. Ligne de contact selon la revendication 8, **caractérisée en ce que** les crochets à déclic (20) de l'organe d'assemblage (17) sont disposés au niveau de la plaque de base (18) de telle manière que lorsqu'un connecteur (19) est enfiché dans un profilé isolant (1), le crochet à déclic (20) associé parvient dans un compartiment (9) fermé du profilé isolant (1), et **en ce que** l'engrènement par complémentarité de forme avec l'ouverture (16) se fait depuis l'intérieur du compartiment (9) fermé.

10. Ligne de contact selon la revendication 3, **caractérisée en ce que** l'engrènement par complémentarité de forme entre l'organe d'assemblage (117) et un profilé isolant (101) permet un déplacement relatif réversible d'une distance définie entre l'organe d'assemblage (117) et le profilé isolant (101) dans la direction longitudinale du profilé isolant (101).

11. Ligne de contact selon la revendication 10, **caractérisée en ce que** l'organe d'assemblage (117) est constitué d'au moins deux composants (118, 119) différents, parmi lesquels l'un des composants forme l'élément d'enfichage (119) et l'autre forme l'élément de butée (118), et **en ce que** les deux composants (118, 119) de l'organe d'assemblage (117) peuvent être reliés dans le même temps par complémentarité de forme l'un à l'autre et à au moins un profilé isolant (101).

12. Ligne de contact selon la revendication 11, **caractérisée en ce que** le profilé isolant (101) présente, à proximité d'une extrémité côté frontal, dans des parois (131) de compartiments (106) de ce type fermés, dans lesquels respectivement un élément d'enfichage (119) d'un organe d'assemblage (117) peut être enfiché, des ouvertures (132) accessibles depuis l'extérieur, s'étendant dans la direction longitudinale du profilé isolant (101), par lesquels dépasse un élément d'engrènement (137, 139) prévu au niveau de l'organe d'assemblage (117) une fois l'assemblage par complémentarité de forme des deux composants (118, 119) dudit organe d'assemblage réalisé, sachant que la dimension de l'élément d'engrènement (137, 139) dans la direction longitudinale du profilé isolant (101) est inférieure à la longueur d'une ouverture (132).

13. Ligne de contact selon la revendication 12, **caractérisée en ce que** l'élément d'enfichage (119) de l'organe d'assemblage (117) présente plusieurs ouvertures (133, 134, 135) disposées les unes derrière les autres dans la direction longitudinale de l'élément d'enfichage (119), dont au moins une ouverture peut être amenée du fait de l'enfichage de l'élément d'enfichage (119) dans le profilé isolant (101) dans une position, dans laquelle elle est recouverte dans la direction longitudinale par l'ouverture (132), accessible depuis l'extérieur, dans la paroi (131) du compartiment (106) fermé, dans lequel compartiment l'élément d'enfichage (119) est enfiché, et **en ce qu'**un élément d'engrènement (137, 139) dépassant d'un autre composant (118) de l'organe d'assemblage (117) peut être introduit, dans ladite position de l'élément d'enfichage (119) en passant par l'ouverture (132) dans la paroi (131) du compartiment (106) fermé, dans l'ouverture (133, 135) recouverte par ledit compartiment, de l'élément d'enfichage (119) et peut être enclenché à cet endroit par complémentarité de forme avec l'élément d'enfichage (119).

14. Ligne de contact selon la revendication 13, **caractérisée en ce qu'**un élément d'engrènement (137, 139) du deuxième composant (118) présente plusieurs crochets à déclic (140) adaptés pour former un assemblage par déclic avec une ouverture (133, 134, 135) de l'élément d'enfichage (119).

15. Ligne de contact selon la revendication 13 ou 14, **caractérisée en ce que** l'autre composant (118) présente une partie principale (136), qui forme une butée lorsque l'organe d'assemblage (117) est monté avec deux profilés isolants (101) se suivant, laquelle butée maintient les côtés frontaux des deux profilés isolants (101), indépendamment des positions et dimensions des éléments d'engrènement (137, 139) ainsi que des ouvertures (132) dans les profilés isolants (101) à une distance minimale prédéterminée.

16. Ligne de contact selon l'une quelconque des revendications 10 à 15, **caractérisée en ce que**, lorsqu'un organe d'assemblage (117) est monté avec deux profilés isolants (101) se suivant, la longueur minimale d'un trajet s'étendant sur la surface d'un élément d'enfichage (119) qui mène depuis un premier point sur la surface de l'élément d'enfichage (119), lequel point se trouve à proximité immédiate d'un premier rail conducteur (4), à un deuxième point sur la surface de l'élément d'enfichage (119), lequel point se trouve à proximité immédiate d'un autre rail conducteur (4), dans chaque position de l'organe d'assemblage (117) à l'intérieur de la zone de déplacement de ce dernier, présente, dans la direction longitudinale des profilés isolants (101), une longueur, laquelle est au moins aussi grande que la longueur du trajet le plus court entre deux points sur le côté frontal du profilé isolant (101), le premier point se trouvant à proximité immédiate d'un premier rail conducteur (4) et le second point se trouvant à proximité immédiate d'un autre rail conducteur (4).
